# EUROPEAN PATENT SPECIFICATION

(11) **EP 4 378 788 B1**
(45) Date of publication and mention of the grant of the patent: **23.04.2025**
(21) Application number: 23207948.3
(22) Date of filing: 06.11.2023
(51) Int. Cl.: B60W 50/02, B60W 50/029, B60W 50/035, B60W 50/04, B62D 5/04, B60W 10/184, B60W 10/20, B60W 10/22, B62D 9/00

(54) **STEERING CONTROL METHOD AND SYSTEM FOR VEHICLE, RELATED APPARATUS, AND VEHICLE**
LENKSTEUERUNGSVERFAHREN UND -SYSTEM FÜR EIN FAHRZEUG, ZUGEHÖRIGE VORRICHTUNG UND FAHRZEUG
PROCÉDÉ ET SYSTÈME DE COMMANDE DE DIRECTION POUR VÉHICULE, APPAREIL ASSOCIÉ ET VÉHICULE

(30) Priority: 07.11.2022 CN 202211385760
(43) Date of publication of application: 05.06.2024
(73) Proprietor: Nio Technology (Anhui) Co., Ltd, Hefei City, Anhui 230601 (CN)
(72) Inventor: ZHU, Yuhua, Hefei City, 230601 (CN); YUAN, Ming, Hefei City, 230601 (CN)
(74) Representative: v. Bezold & Partner Patentanwälte - PartG mbB

(56) References cited:
- CN-A- 114 834 465
- DE-A1- 102004 058 996
- DE-A1- 102015 014 882

## Description

### TECHNICAL FIELD

The invention relates to the technical field of vehicle steering control, and in particular to a steering control method and system for a vehicle, a related apparatus, and a vehicle comprising the steering control system.

### BACKGROUND

At present, steering control of an autonomous vehicle is preferentially implemented by a steering-by-wire (SBW) system. The steering-by-wire system especially controls front wheel steering of the vehicle. If the steering-by-wire system fails, a driver may be unable to control a lateral movement of the vehicle by means of a steering wheel, losing control over the vehicle, and then causing serious safety hazards. Particularly when the speed of the vehicle is lower, due to the failure of the steering-by-wire system, it is impossible to provide a sufficient steering rack force for front wheels, making it difficult for the driver to rotate the steering wheel.

Chinese patent (CN114834465A) discloses an emergency steering control method, the method comprising: step A: during the driving process of the vehicle, monitor the working state of the vehicle steering control system and the driving speed of the vehicle in real time; step B: when a steering failure occurs in the steering control system, obtain the driving speed of the vehicle in real time; step C: if the traveling speed of the vehicle is higher than the first threshold, the vehicle controller sends a braking command to the braking system to realize emergency steering of the vehicle; if the traveling speed of the vehicle is not higher than the first threshold if the threshold value is exceeded, the vehicle controller sends a drive command to the drive system to implement emergency steering of the vehicle.

### SUMMARY

In an aspect of the invention, the technical problem to be solved is how to control a vehicle to safely steer when a steering-by-wire system fails, that is, the steering capability of front wheels fails.

In addition, other aspects of the invention also aim to solve or alleviate other technical problems existing in the prior art.

The subject-matter of the preset invention is defined by the features of the independent claims. Further preferred embodiments of the preset invention are defined in the dependent claims.The invention provides a steering control method and system for a vehicle, a related apparatus, and a vehicle. In particular, according to an aspect of the invention,
a steering control method for a vehicle is provided. The method comprises:
monitoring a steering capability state of front wheels of the vehicle;
if the steering capability of the front wheels of the vehicle fails, selecting a preset vehicle speed threshold; and
determining additional steering used to compensate for front wheel steering based on a comparision of a current vehicle speed and the vehicle speed threshold, the additional steering comprises one or more of additional rear wheel steering, additional roll steering by adjusting a vehicle roll angle, and vector torque steering by adjusting longitudinal forces for the wheels,
the step of selecting a preset vehicle speed threshold comprises: selecting the preset vehicle speed threshold according to the failure degree of the steering capability of the front wheels of the vehicle.

Optionally, according to an embodiment of the invention, the failure degree of the steering capability of the front wheels of the vehicle comprises partial failure of the steering capability and complete failure of the steering capability; and the vehicle speed threshold comprises a first vehicle speed threshold associated with the partial failure of the steering capability and a second vehicle speed threshold associated with the complete failure of the steering capability.

Optionally, according to an embodiment of the invention,
when the failure degree of the steering capability is the partial failure of the steering capability, it is determined whether the current vehicle speed is greater than the first vehicle speed threshold; and if yes, the additional steering is not used, and if not, the additional rear wheel steering and the additional roll steering are used as the additional steering; and
when the failure degree of the steering capability is the complete failure of the steering capability, it is determined whether the current vehicle speed is greater than the second vehicle speed threshold; and if yes, the vector torque steering and the additional rear wheel steering are used as the additional steering, and if not, the additional rear wheel steering and the additional roll steering are used as the additional steering.

Optionally, according to an embodiment of the invention, the method further comprises:
when the failure degree of the steering capability is the partial failure of the steering capability or the complete failure of the steering capability, sending a deceleration instruction to a brake controller of the vehicle such that the brake controller controls a brake of the vehicle to perform a deceleration action.

Optionally, according to an embodiment of the invention, when the additional steering comprises the additional roll steering, a first control instruction is sent to a suspension controller to control an active suspension to increase a vehicle roll angle so as to provide additional yaw moment; and/or when the additional steering comprises the vector torque steering, a second control instruction is sent to a driving controller and/or a brake controller to adjust longitudinal force for front wheels and rear wheels of the vehicle so as to provide the additional yaw moment.

According to another aspect of the invention, the invention provides a steering control system, comprising:
a monitoring module configured to monitor a steering capability state of front wheels of a vehicle;
a determination module configured to select a preset vehicle speed threshold when the steering capability of the front wheels of the vehicle fails, then compare a current vehicle speed and the vehicle speed threshold, and determine, according to a comparison of the current vehicle speed and the vehicle speed threshold, additional steering used to compensate for front wheel steering, the additional steering comprising one or more of additional rear wheel steering, additional roll steering achieved by adjusting a vehicle roll angle, and vector torque steering achieved by adjusting longitudinal force for the wheels; and
a control module configured to send a corresponding control instruction to a steering actuation unit according to the additional steering determined by the determination module;
the determination module further configured to obtain the failure degree of the steering capability of the front wheels of the vehicle from the monitoring module, and select the preset vehicle speed threshold according to the failure degree.

Optionally, according to an embodiment in another aspect of the invention, the failure degree of the steering capability of the front wheels of the vehicle comprises partial failure of the steering capability and complete failure of the steering capability; and the vehicle speed threshold comprises a first vehicle speed threshold associated with the partial failure of the steering capability and a second vehicle speed threshold associated with the complete failure of the steering capability.

Optionally, according to an embodiment in another aspect of the invention, when the failure degree of the steering capability obtained by the determination module is the partial failure of the steering capability, it is determined whether the current vehicle speed is greater than the first vehicle speed threshold; and if yes, it is determined that the additional steering is not used, and if not, it is determined that the additional rear wheel steering and the additional roll steering are used as the additional steering; and when the failure degree of the steering capability obtained by the determination module is the complete failure of the steering capability, it is determined whether the current vehicle speed is greater than the second vehicle speed threshold; and if yes, it is determined that the vector torque steering and the additional rear wheel steering are used as the additional steering, and if not, it is determined that the additional rear wheel steering and the additional roll steering are used as the additional steering.

Optionally, according to an embodiment in another aspect of the invention, when the failure degree of the steering capability is the partial failure of the steering capability or the complete failure of the steering capability, the control module sends a deceleration instruction to a brake controller of the vehicle such that the brake controller controls a brake of the vehicle to perform a deceleration action.

Optionally, according to an embodiment in another aspect of the invention, when the additional steering comprises the additional roll steering, the control module sends a first control instruction to a suspension controller to control an active suspension to increase a vehicle roll angle so as to provide additional yaw moment, and/or when the additional steering comprises the vector torque steering, the control module sends a second control instruction to a driving controller and/or a brake controller to adjust longitudinal force for front wheels and rear wheels of the vehicle so as to provide the additional yaw moment.

According to still another aspect of the invention, the invention provides a computer-readable storage medium having a computer program stored thereon, wherein the computer program, when executed by a processor, implements a steering control method as described above.

According to still yet another aspect of the invention, the invention provides a vehicle, comprising a steering control system as described above.

Benefits of the invention are as follows: the steering of the vehicle is controlled according to different failure degrees of the steering capability of the front wheels, thereby ensuring the steering safety of the vehicle. When the front wheels lose part or all of their steering capability, the front wheel steering is compensated with the additional rear wheel steering, the additional roll steering and the vector torque steering, thereby avoiding the situation where a driver cannot perform steering. For the different failure degrees of the steering capability of the front wheels and under different vehicle speeds, a combination of the additional rear wheel steering, the additional roll steering and the vector torque steering is selected in a targeted manner to compensate for the front wheel steering, so that the use of the steering capabilities of the additional roll steering and the vector torque steering can be maximized while taking the vehicle speed into account to compensate for the loss of the steering capability of the front wheels as much as possible.

### BRIEF DESCRIPTION OF DRAWINGS

The above and other features of the invention will become apparent with reference to the accompany drawings, in which:
FIG. 1 shows a schematic flowchart of a steering control method for a vehicle according to an embodiment of the invention;
FIG. 2 shows a graph of an actual steering angle of a steering wheel and a front wheel rack force at different rotation speeds during vehicle steering; and
FIG. 3 shows a schematic module diagram of a steering control system according to an embodiment of the invention.

### DESCRIPTION OF EMBODIMENTS

The following specific embodiments and the accompanying drawings are merely exemplary descriptions of the technical solutions.

Orientation terms, such as up, down, left, right, front, rear, front side, back side, top, and bottom, which are or may be mentioned in this description, are defined with respect to the structures shown in the accompanying drawing, and are relative concepts, and therefore may correspondingly vary depending on different positions and different usage states. Therefore, these or other orientation terms should not be construed as restrictive terms as well. Moreover, the terms such as "first" "second", "third" or similar expressions are only used for description and distinction purposes, and should not be construed as indicating or implying the relative importance of corresponding members.

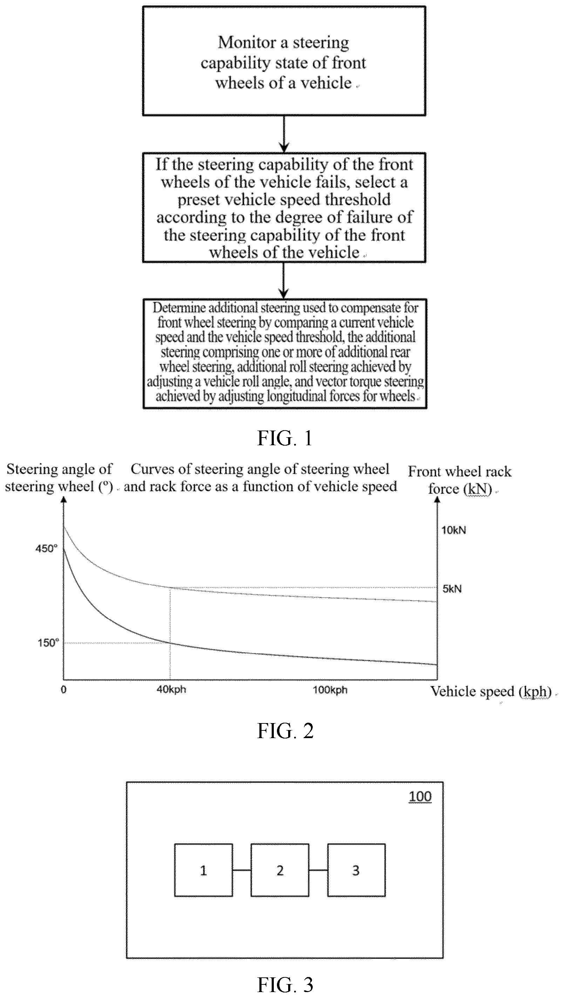

Reference is made to FIG. 1, which shows a schematic flowchart of a steering control method for a vehicle according to an embodiment of the invention. The steering control method of the invention is used to compensate for the steering capability of front wheels when the steering capability of the front wheels fails, so as to ensure the steering safety of the vehicle. The steering control method comprises:
monitoring a steering capability state of front wheels of the vehicle;
if the steering capability of the front wheels of the vehicle fails, selecting a preset vehicle speed threshold according to the failure degree of the steering capability of the front wheels of the vehicle; and determining additional steering used to compensate for front wheel steering by comparing a current vehicle speed and the vehicle speed threshold, the additional steering comprises one or more of additional rear wheel steering, additional roll steering by adjusting a vehicle roll angle, and vector torque steering by adjusting longitudinal forces for the wheels.

Most traditional vehicles only use front wheel steering during steering. That is, a steering angle of the front wheels is controlled by means of a steering wheel to achieve steering during steering. When the steering wheel is rotated to adjust the steering angle of the wheels, rear wheels are not rotated. However, at present, many vehicles can perform front wheel steering and rear wheel steering simultaneously. When a driver rotates a steering wheel, required steering angles are allocated for the front wheels and rear wheels according to a current heading angle and a target heading angle of the vehicle, thereby achieving accurate steering. In this way, part of the steering needs of the front wheels can be met to a certain extent by means of the rear wheels.

It should be noted that the additional rear wheel steering described in the invention is different from the above-mentioned rear wheel steering. In a vehicle whose front wheels and rear wheels can be steered, both the front wheels and the rear wheels are usually rotated at a certain angle during steering to achieve overall steering. However, the additional rear wheel steering in the invention is additional rear wheel steering or an additional rear wheel steering angle when the steering capability of the front wheels is partially or entirely out of control. That is to say, in this case, first, during vehicle steering, both the front wheels and the rear wheels are typically rotated at a certain steering angle. However, since the steering capability of the front wheels is partially or entirely out of control, this steering control method enables the rear wheels to further rotate at an additional steering angle so as to compensate for the loss of the steering capability of the front wheels. This additional rear wheel steering behavior is defined as "additional rear wheel steering" in the invention.

Similarly, a concept of "additional roll steering" in the invention is also different from a general concept of "roll steering". Generally, the term "roll steering" refers to rotations of front steering wheels around a kingpin and rotations of rear wheels around an axis perpendicular to the ground, which are caused by the rolling of a cabin under the action of a lateral force during vehicle steering, that is, changes in wheel steering angles. This type of roll steering usually occurs due to a movement of a suspension during vehicle steering. However, in the invention, the term "additional roll steering" refers to steering in which when the steering capability of the front wheels is partially or entirely out of control, a roll angle of a vehicle body is increased by adjusting an active suspension, thereby increasing yaw moment of the vehicle, which is equivalent to increase the degree of general roll steering, such that the rolling degree of the vehicle body is increased, and the steering capability of the vehicle is compensated by increasing the roll. Considering the stability and safety of the vehicle during turning, "additional roll steering" is generally implemented when the vehicle speed is lower.

A concept of "vector torque steering" in the invention refers to vehicle steering achieved by adjusting longitudinal force of a vehicle, such as driving force and braking force for each wheel. By adjusting the driving force and the braking force for each wheel, the additional yaw moment can be generated to facilitate the vehicle steering. Generally, the "vector torque steering" has a greater impact on wheel steering when the vehicle speed is higher.

According to an embodiment of the invention, the failure degree of the steering capability of the front wheels of the vehicle comprises partial failure of the steering capability (for example, a loss of half of the steering capability, which may also be a loss of 25%, 50%, or 75% of the steering capability in the case of some steering-by-wire systems) and complete failure of the steering capability. Reference is made to FIG. 2, which shows a graph of an actual steering angle of a steering wheel and a front wheel rack force at different rotation speeds during vehicle steering. As can be seen from FIG. 2, during vehicle steering, the actual steering angle of the steering wheel and the required front wheel rack force decrease as the vehicle speed increases. In FIG. 2, a maximum rack force value of a front wheel steering gear is 10 kN. For example, when the front wheels lose half of their steering capability, the rack force is 5 kN. In this case, if the vehicle speed is higher than 40 Kilometres Per Hour (Kph), the actual steering angle of the steering wheel does not decrease significantly, but the required front wheel rack force is less than 5 kN. That is to say, in this case, even if the front wheels lose half of their steering capability, the steering need can also be met only by using the front wheel steering. If the vehicle speed is less than or equal to 40 Kilometres Per Hour (Kph), the required rack force is greater than 5 kN. In this case, the rack force of the front wheel steering gear is not enough to maintain steering. Therefore, in this case, other steering methods need to be introduced to compensate for insufficient steering capability of the front wheels.

In an embodiment of the invention, the vehicle speed threshold is preset in a determination module of a steering control system, and is determined by means of an entire vehicle test on the premise of taking into account steering safety, the maximum steering angle of the steering wheel, and the front wheel rack force. The vehicle speed threshold comprises a first vehicle speed threshold associated with the partial failure of the steering capability. The first vehicle speed threshold is, for example, 40 Kilometres Per Hour (Kph), which corresponds to the case of 50% of failure of the steering capability in FIG. 2. Therefore, in this embodiment, when it is determined whether the vehicle speed is greater than the first vehicle speed threshold, if yes, the additional steering is not used, and the steering can be completely performed only by the front wheel steering of the vehicle (in a vehicle whose front wheels and rear wheels can both be steered, the steering can be performed by means of normal front wheel steering and rear wheel steering). When it is determined that the vehicle speed is less than or equal to the first vehicle speed threshold, the additional rear wheel steering and the additional roll steering are used as the additional steering, because the front wheel steering cannot meet the steering need of the entire vehicle in this case; moreover, the additional roll steering does not affect the safety and stability of vehicle steering when the vehicle speed is lower, and can stably provide an additional yaw moment. Therefore, the steering need of the entire vehicle in this case is met by means of all the front wheel steering (in a vehicle whose front wheels and rear wheels can both be steered, it is normal front wheel steering and rear wheel steering), the additional rear wheel steering and the additional roll steering.

In an embodiment of the invention, the vehicle threshold further comprises a second vehicle speed threshold associated with the complete failure of the steering capability. The second vehicle speed threshold is, for example, 60 Kilometres Per Hour (Kph). When the steering capability of the front wheels of the vehicle completely fails, the front wheels completely cannot be steered, and thus other additional steering must be provided in this case. In this embodiment, it is determined whether the current vehicle speed is greater than the second vehicle speed threshold. If yes, the vector torque steering and the additional rear wheel steering are used as the additional steering, because the vector torque steering can provide greater steering capability when the vehicle speed is higher. If it is determined that the current vehicle speed is less than or equal to the second vehicle speed threshold, the additional rear wheel steering and the additional roll steering are used as the additional steering, because the additional roll steering does not affect the safety and stability of the vehicle steering when the vehicle speed is lower, and can stably provide the additional yaw moment.

In an embodiment of the invention, the steering control method further comprises:
when the failure degree of the steering capability is the partial failure of the steering capability or the complete failure of the steering capability, sending a deceleration instruction to a brake controller of the vehicle such that the brake controller controls a brake of the vehicle to perform a deceleration action.

Because the loss of steering capability of the front wheels of the vehicle is regarded as a relatively dangerous operating condition, which means that the steering-by-wire system already has a certain failure degree. Therefore, the vehicle should be braked while compensating for the steering capability of the vehicle as much as possible so that the driver can still steer the vehicle precisely. In addition, regardless of whether the failure degree of the steering capability of the vehicle is the partial failure or the complete failure, the vehicle should be braked to slowly reduce the speed while ensuring the safety and stability of the vehicle steering, and is finally stopped to ensure the safety of the driver.

In an embodiment of the invention, when the additional steering comprises the additional roll steering, a first control instruction is sent to a suspension controller, controlling an active suspension to increase a vehicle roll angle so as to provide additional yaw moment.

The additional roll steering is achieved by controlling the active suspension to increase the vehicle roll angle. When the additional steering comprises the additional roll steering, a control module of the steering control system sends the first control instruction to the suspension controller. This first control instruction enables the active suspension to increase the vehicle roll angle, especially a roll angle of the vehicle toward a steering center, and comprises a value of the roll angle that the active suspension should increase, such that a final superposition effect of the additional steering and the front wheel steering can meet the steering need of the driver.

In an embodiment of the invention, when the additional steering comprises the vector torque steering, a second control instruction is sent to a driving controller and/or a brake controller to adjust longitudinal force for front wheels and rear wheels of the vehicle so as to provide additional yaw moment.

The vector torque steering is achieved by adjusting the longitudinal force of the vehicle. The control module of the steering control system sends the second control instruction to one or both of the driving controller and the brake controller so as to adjust the driving force or the braking force for each wheel (or adjust only the driving force or the braking force for the front wheels in the case of a non-four-wheel drive vehicle), causing the vehicle to generate additional yaw moment, especially the yaw moment in the same direction as yaw angular velocity of the vehicle. The second control instruction comprises driving force value or braking force value that each wheel needs to adjust, such that the steering need of the driver can just be met by combining the effect of the vector torque steering with the effect of other steering.

Another aspect of the invention further provides a steering control system 100. Reference is made to FIG. 3, which shows a schematic module diagram of the steering control system 100 according to an embodiment of the invention. In this system, since a specific shape and an internal structure of each component are not the subject matter of the invention, for the ease of clarity and conciseness, all these components are schematically shown in the form of structural modules. The given structural diagram is an embodiment of the invention. The steering control system comprises:
a monitoring module 1 configured to monitor a steering capability state of front wheels of a vehicle;
a determination module 2 configured to obtain, when the steering capability of the front wheels of the vehicle fails, the failure degree of the steering capability of the front wheels of the vehicle from the monitoring module 1, select a preset vehicle speed threshold according to the failure degree, then compare a current vehicle speed and the vehicle speed threshold, and determine, according to a comparison of the current vehicle speed and the vehicle speed threshold, additional steering used to compensate for front wheel steering, the additional steering comprises one or more of additional rear wheel steering, additional roll steering by adjusting a vehicle roll angle, and vector torque steering by adjusting longitudinal forces for the wheels; and
a control module 3 configured to send a corresponding control instruction to a steering actuation unit according to the additional steering determined by the determination module 2.

In an embodiment of the invention, the failure degree of the steering capability of the front wheels of the vehicle comprises partial failure of the steering capability and complete failure of the steering capability.

In an embodiment of the invention, the vehicle speed threshold comprises a first vehicle speed threshold associated with the partial failure of the steering capability and a second vehicle speed threshold associated with the complete failure of the steering capability.

In an embodiment of the invention, when the failure degree of the steering capability obtained by the determination module 2 is the partial failure of the steering capability, it is determined whether the current vehicle speed is greater than the first vehicle speed threshold; and if yes, it is determined that the additional steering is not used, and if not, it is determined that the additional rear wheel steering and the additional roll steering are used as the additional steering; and when the failure degree of the steering capability obtained by the determination module 2 is the complete failure of the steering capability, it is determined whether the current vehicle speed is greater than the second vehicle speed threshold; and if yes, it is determined that the vector torque steering and the additional rear wheel steering are used as the additional steering, and if not, it is determined that the additional rear wheel steering and the additional roll steering are used as the additional steering.

In an embodiment of the invention, when the failure degree of the steering capability is the partial failure of the steering capability or the complete failure of the steering capability, the control module 3 sends a deceleration instruction to a brake controller of the vehicle such that the brake controller controls a brake of the vehicle to perform a deceleration action.

In an embodiment of the invention, when the additional steering comprises the additional roll steering, the control module 3 sends a first control instruction to a suspension controller to control an active suspension to increase a vehicle roll angle so as to provide additional yaw moment.

In an embodiment of the invention, when the additional steering comprises the vector torque steering, the control module 3 sends a second control instruction to a driving controller and/or a brake controller, adjusting longitudinal force for front wheels and rear wheels of the vehicle so as to provide additional yaw moment.

In an embodiment of the invention, the first speed threshold is, for example, 40 Kilometres Per Hour (Kph), and the second speed threshold is, for example, 60 Kilometres Per Hour (Kph).

In the description of the invention, the control modules such as "the determination module" and "the control module" may comprise hardware, software, or a combination thereof. A module may comprise a hardware circuit, various suitable sensors, a communication port and a memory, or may comprise a software part, for example, a program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program codes, for example, a magnetic disk, a hard disk, an optical disc, a flash memory, a read-only memory, or a random access memory.

Further, it should be understood that, since the configuration of the control module is merely used for describing functional units of the system corresponding to the steering control method of the invention, a physical device corresponding to the control module may be a processor itself, or part of software, part of hardware, or part of a combination of software and hardware in the processor. Therefore, there being one control module is merely exemplary. It can be understood by those skilled in the art that the control module may be adaptively split based on actual conditions. A specific split form of the control module does not cause the technical solutions to depart from the principle of the invention. Therefore, all technical solutions after the split shall fall within the scope of protection of the invention.

A third aspect of the invention provides a computer-readable storage medium having a computer program stored thereon, wherein the computer program, when executed by a processor, implements a steering control method as described above.

It can be understood that the computer-readable storage medium has all technical effects of the steering control method as described above, which will not be repeated here.

A fourth aspect of the invention provides a computer device, comprising a memory and a processor, wherein the memory is adapted to store a plurality of program codes, and the program codes are adapted to be loaded and run by the processor so as to perform a steering control method as described above.

It can be understood that the computer device has all technical effects of the steering control method as described above, which will not be repeated here. The computer device may comprise a control device formed by various electronic devices.

Those skilled in the art can understand that in the invention, some or all of the procedures of the steering control method may be implemented by a computer program instructing relevant hardware. The computer program may be stored in a computer-readable storage medium. The computer program, when executed by a processor, may implement the steps of the foregoing method embodiments. The computer program comprises a computer program code, and it can be understood that the program code comprises, but is not limited to, a program code for performing the steering control method as described above. For ease of description, only the parts related to the invention are shown. The computer program code may be in the form of source code, object code, executable file, or some intermediate forms. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not comprise an electric carrier signal and a telecommunications signal.

A fifth aspect of the invention provides a vehicle, comprising a steering control system as described above.

It should be understood that the steering control system of the invention may be mounted on various vehicles, including cars, vans, buses, hybrid vehicles, battery electric vehicles, and so on. Therefore, the subject matter of the invention further aims to set forth various vehicles provided with the steering control system of the invention.

**It** should be understood that all of the above preferred embodiments are exemplary rather than limiting.

## Claims

1. A steering control method for a vehicle, comprising:
monitoring a steering capability state of front wheels of the vehicle;
if the steering capability of the front wheels of the vehicle fails, selecting a preset vehicle speed threshold; and
determining additional steering used to compensate for front wheel steering based on a comparision of a current vehicle speed and the vehicle speed threshold, the additional steering comprises one or more of additional rear wheel steering, additional roll steering by adjusting a vehicle roll angle, and vector torque steering by adjusting longitudinal force for the wheels;
**characterized in that**, the step of selecting a preset vehicle speed threshold comprises: selecting the preset vehicle speed threshold according to the failure degree of the steering capability of the front wheels of the vehicle.

2. The steering control method according to claim 1, wherein the failure degree of the steering capability of the front wheels of the vehicle comprises partial failure of the steering capability and complete failure of the steering capability; and the vehicle speed threshold comprises a first vehicle speed threshold associated with the partial failure of the steering capability and a second vehicle speed threshold associated with the complete failure of the steering capability.

3. The steering control method according to claim 2, wherein
when the failure degree of the steering capability is the partial failure of the steering capability, it is determined whether the current vehicle speed is greater than the first vehicle speed threshold; and if yes, the additional steering is not used, and if not, the additional rear wheel steering and the additional roll steering are used as the additional steering; and
when the failure degree of the steering capability is the complete failure of the steering capability, it is determined whether the current vehicle speed is greater than the second vehicle speed threshold; and if yes, the vector torque steering and the additional rear wheel steering are used as the additional steering, and if not, the additional rear wheel steering and the additional roll steering are used as the additional steering.

4. The steering control method according to claim 2, further comprising:
when the failure degree of the steering capability is the partial failure of the steering capability or the complete failure of the steering capability, sending a deceleration instruction to a brake controller of the vehicle such that the brake controller controls a brake of the vehicle to perform a deceleration action.

5. The steering control method according to claim 1, wherein when the additional steering comprises the additional roll steering, a first control instruction is sent to a suspension controller to control an active suspension to increase a vehicle roll angle so as to provide additional yaw moment, and/or when the additional steering comprises the vector torque steering, a second control instruction is sent to a driving controller and/or a brake controller to adjust longitudinal force for front wheels and rear wheels of the vehicle so as to provide the additional yaw moment.

6. A steering control system (100), comprising:
a monitoring module (1) configured to monitor a steering capability state of front wheels of a vehicle;
a determination module (2) configured to select a preset vehicle speed threshold when the steering capability of the front wheels of the vehicle fails, then compare a current vehicle speed and the vehicle speed threshold, and determine, according to a comparison of the current vehicle speed and the vehicle speed threshold, additional steering used to compensate for front wheel steering, the additional steering comprises one or more of additional rear wheel steering, additional roll steering by adjusting a vehicle roll angle, and vector torque steering by adjusting longitudinal force for the wheels; and
a control module (3) configured to send a corresponding control instruction to a steering actuation unit according to the additional steering determined by the determination module (2);
**characterised in that**,
the determination module (2) further configured to obtain the failure degree of the steering capability of the front wheels of the vehicle from the monitoring module (1), and select the preset vehicle speed threshold according to the failure degree.

7. The steering control system (100) according to claim 6, wherein the failure degree of the steering capability of the front wheels of the vehicle comprises partial failure of the steering capability and complete failure of the steering capability; and the vehicle speed threshold comprises a first vehicle speed threshold associated with the partial failure of the steering capability and a second vehicle speed threshold associated with the complete failure of the steering capability.

8. The steering control system (100) according to claim 7, wherein
when the failure degree of the steering capability obtained by the determination module (2) is the partial failure of the steering capability, it is determined whether the current vehicle speed is greater than the first vehicle speed threshold; and if yes, it is determined that the additional steering is not used, and if not, it is determined that the additional rear wheel steering and the additional roll steering are used as the additional steering; and
when the failure degree of the steering capability obtained by the determination module (2) is the complete failure of the steering capability, it is determined whether the current vehicle speed is greater than the second vehicle speed threshold; and if yes, it is determined that the vector torque steering and the additional rear wheel steering are used as the additional steering, and if not, it is determined that the additional rear wheel steering and the additional roll steering are used as the additional steering.

9. The steering control system (100) according to claim 7, wherein when the failure degree of the steering capability is the partial failure of the steering capability or the complete failure of the steering capability, the control module (3) sends a deceleration instruction to a brake controller of the vehicle such that the brake controller controls a brake of the vehicle to perform a deceleration action.

10. The steering control system (100) according to claim 6, wherein when the additional steering comprises the additional roll steering, the control module (3) sends a first control instruction to a suspension controller to control an active suspension to increase a vehicle roll angle so as to provide additional yaw moment, and/or when the additional steering comprises the vector torque steering, the control module (3) sends a second control instruction to a driving controller and/or a brake controller to adjust longitudinal force for front wheels and rear wheels of the vehicle so as to provide the additional yaw moment.

11. A computer-readable storage medium having a computer program stored thereon, wherein the computer program, when executed by a processor, implements a steering control method according to any one of claims 1 to 5.

12. A vehicle, comprising a steering control system (100) according to any one of claims 6 to 10.

## Patentansprüche

1. Lenksteuerungsverfahren für ein Fahrzeug, das Folgendes umfasst:
Überwachen eines Lenkfähigkeitszustands von Vorderrädern des Fahrzeugs;
wenn die Lenkfähigkeit der Vorderräder des Fahrzeugs ausfällt, Auswählen eines voreingestellten Fahrzeuggeschwindigkeitsschwellenwerts; und
Bestimmen einer zusätzlichen Lenkung, die genutzt wird, um eine Vorderradlenkung auszugleichen, basierend auf einem Vergleich einer momentanen Fahrzeuggeschwindigkeit und des Fahrzeuggeschwindigkeitsschwellenwerts, wobei die zusätzliche Lenkung eines oder mehrere von einer zusätzlichen Hinterradlenkung, einer zusätzlichen Wanklenkung durch Anpassen eines Fahrzeugwankwinkels und einer Vektordrehmomentlenkung durch Anpassen einer Längskraft für die Räder umfasst;
**dadurch gekennzeichnet, dass** der Schritt des Auswählens eines voreingestellten Fahrzeuggeschwindigkeitsschwellenwerts Folgendes umfasst: Auswählen des voreingestellten Fahrzeuggeschwindigkeitsschwellenwerts in Abhängigkeit von dem Ausfallgrad der Lenkfähigkeit der Vorderräder des Fahrzeugs.

2. Lenksteuerungsverfahren nach Anspruch 1, wobei der Ausfallgrad der Lenkfähigkeit der Vorderräder des Fahrzeugs einen Teilausfall der Lenkfähigkeit und einen Vollausfall der Lenkfähigkeit umfasst; und der Fahrzeuggeschwindigkeitsschwellenwert einen ersten Fahrzeuggeschwindigkeitsschwellenwert, der mit dem Teilausfall der Lenkfähigkeit assoziiert ist, und einen zweiten Fahrzeuggeschwindigkeitsschwellenwert, der mit dem Vollausfall der Lenkfähigkeit assoziiert ist, umfasst.

3. Lenksteuerungsverfahren nach Anspruch 2, wobei,
wenn der Ausfallgrad der Lenkfähigkeit der Teilausfall der Lenkfähigkeit ist, bestimmt wird, ob die momentane Fahrzeuggeschwindigkeit größer als der erste Fahrzeuggeschwindigkeitsschwellenwert ist; und, wenn ja, die zusätzliche Lenkung nicht genutzt wird und, wenn nein, die zusätzliche Hinterradlenkung und die zusätzliche Wanklenkung als die zusätzliche Lenkung genutzt werden; und,
wenn der Ausfallgrad der Lenkfähigkeit der Vollausfall der Lenkfähigkeit ist, bestimmt wird, ob die momentane Fahrzeuggeschwindigkeit größer als der zweite Fahrzeuggeschwindigkeitsschwellenwert ist; und, wenn ja, die Vektordrehmomentlenkung und die zusätzliche Hinterradlenkung als die zusätzliche Lenkung genutzt werden und, wenn nein, die zusätzliche Hinterradlenkung und die zusätzliche Wanklenkung als die zusätzliche Lenkung genutzt werden.

4. Lenksteuerungsverfahren nach Anspruch 2, das ferner Folgendes umfasst:
wenn der Ausfallgrad der Lenkfähigkeit der Teilausfall der Lenkfähigkeit oder der Vollausfall der Lenkfähigkeit ist, Senden einer Verzögerungsanweisung an eine Bremssteuerung des Fahrzeugs, sodass die Bremssteuerung eine Bremse des Fahrzeugs zum Durchführen einer Verzögerungsaktion steuert.

5. Lenksteuerungsverfahren nach Anspruch 1, wobei, wenn die zusätzliche Lenkung die zusätzliche Wanklenkung umfasst, eine erste Steuerungsanweisung an eine Federungssteuerung zum Steuern einer aktiven Federung zum Vergrößern eines Fahrzeugwankwinkels, um ein zusätzliches Giermoment bereitzustellen, gesendet wird und/oder, wenn die zusätzliche Lenkung die Vektordrehmomentlenkung umfasst, eine zweite Steuerungsanweisung an eine Antriebssteuerung und/oder eine Bremssteuerung zum Anpassen einer Längskraft für Vorderräder und Hinterräder des Fahrzeugs, um das zusätzliche Giermoment bereitzustellen, gesendet wird.

6. Lenksteuerungssystem (100), das Folgendes umfasst:
ein Überwachungsmodul (1), das konfiguriert ist, um einen Lenkfähigkeitszustand von Vorderrädern eines Fahrzeugs zu überwachen;
ein Bestimmungsmodul (2), das konfiguriert ist, um einen voreingestellten Fahrzeuggeschwindigkeitsschwellenwert auszuwählen, wenn die Lenkfähigkeit der Vorderräder des Fahrzeugs ausfällt, dann eine momentane Fahrzeuggeschwindigkeit und den Fahrzeuggeschwindigkeitsschwellenwert zu vergleichen und in Abhängigkeit von einem Vergleich der momentanen Fahrzeuggeschwindigkeit und des Fahrzeuggeschwindigkeitsschwellenwerts eine zusätzliche Lenkung zu bestimmen, die genutzt wird, um eine Vorderradlenkung auszugleichen, wobei die zusätzliche Lenkung eines oder mehrere von einer zusätzlichen Hinterradlenkung, einer zusätzlichen Wanklenkung durch Anpassen eines Fahrzeugwankwinkels und einer Vektordrehmomentlenkung durch Anpassen einer Längskraft für die Räder umfasst; und
ein Steuerungsmodul (3), das konfiguriert ist, um eine entsprechende Steuerungsanweisung in Abhängigkeit von der durch das Bestimmungsmodul (2) bestimmten zusätzlichen Lenkung an eine Lenkungsbetätigungseinheit zu senden;
**dadurch gekennzeichnet, dass**
das Bestimmungsmodul (2) ferner konfiguriert ist, um den Ausfallgrad der Lenkfähigkeit der Vorderräder des Fahrzeugs von dem Überwachungsmodul (1) zu erhalten und den voreingestellten Fahrzeuggeschwindigkeitsschwellenwert in Abhängigkeit von dem Ausfallgrad auszuwählen.

7. Lenksteuerungssystem (100) nach Anspruch 6, wobei der Ausfallgrad der Lenkfähigkeit der Vorderräder des Fahrzeugs einen Teilausfall der Lenkfähigkeit und einen Vollausfall der Lenkfähigkeit umfasst; und der Fahrzeuggeschwindigkeitsschwellenwert einen ersten Fahrzeuggeschwindigkeitsschwellenwert, der mit dem Teilausfall der Lenkfähigkeit assoziiert ist, und einen zweiten Fahrzeuggeschwindigkeitsschwellenwert, der mit dem Vollausfall der Lenkfähigkeit assoziiert ist, umfasst.

8. Lenksteuerungssystem (100) nach Anspruch 7, wobei,
wenn der durch das Bestimmungsmodul (2) erhaltene Ausfallgrad der Lenkfähigkeit der Teilausfall der Lenkfähigkeit ist, bestimmt wird, ob die momentane Fahrzeuggeschwindigkeit größer als der erste Fahrzeuggeschwindigkeitsschwellenwert ist; und, wenn ja, bestimmt wird, dass die zusätzliche Lenkung nicht genutzt wird und, wenn nein, bestimmt wird, dass die zusätzliche Hinterradlenkung und die zusätzliche Wanklenkung als die zusätzliche Lenkung genutzt werden; und,
wenn der durch das Bestimmungsmodul (2) erhaltene Ausfallgrad der Lenkfähigkeit der Vollausfall der Lenkfähigkeit ist, bestimmt wird, ob die momentane Fahrzeuggeschwindigkeit größer als der zweite Fahrzeuggeschwindigkeitsschwellenwert ist; und, wenn ja, bestimmt wird, dass die Vektordrehmomentlenkung und die zusätzliche Hinterradlenkung als die zusätzliche Lenkung genutzt werden, und, wenn nein, bestimmt wird, dass die zusätzliche Hinterradlenkung und die zusätzliche Wanklenkung als die zusätzliche Lenkung genutzt werden.

9. Lenksteuerungssystem (100) nach Anspruch 7, wobei, wenn der Ausfallgrad der Lenkfähigkeit der Teilausfall der Lenkfähigkeit oder der Vollausfall der Lenkfähigkeit ist, das Steuerungsmodul (3) eine Verzögerungsanweisung an eine Bremssteuerung des Fahrzeugs sendet, sodass die Bremssteuerung eine Bremse des Fahrzeugs zum Durchführen einer Verzögerungsaktion steuert.

10. Lenksteuerungssystem (100) nach Anspruch 6, wobei, wenn die zusätzliche Lenkung die zusätzliche Wanklenkung umfasst, das Steuerungsmodul (3) eine erste Steuerungsanweisung an eine Federungssteuerung zum Steuern einer aktiven Federung zum Vergrößern eines Fahrzeugwankwinkels, um ein zusätzliches Giermoment bereitzustellen, sendet und/oder, wenn die zusätzliche Lenkung die Vektordrehmomentlenkung umfasst, das Steuerungsmodul (3) eine zweite Steuerungsanweisung an eine Antriebssteuerung und/oder eine Bremssteuerung zum Anpassen einer Längskraft für Vorderräder und Hinterräder des Fahrzeugs, um das zusätzliche Giermoment bereitzustellen, sendet.

11. Computerlesbares Speichermedium, das ein darin gespeichertes Computerprogramm aufweist, wobei das Computerprogramm, wenn es durch einen Prozessor ausgeführt wird, ein Lenksteuerungsverfahren nach einem der Ansprüche 1 bis 5 implementiert.

12. Fahrzeug, das ein Lenksteuerungssystem (100) nach einem der Ansprüche 6 bis 10 umfasst.

## Revendications

1. Procédé de commande de direction pour un véhicule, comprenant :
la surveillance d'un état de capacité de direction de roues avant du véhicule ;
si la capacité de direction des roues avant du véhicule défaillit, la sélection d'un seuil de vitesse de véhicule prédéfini ; et
la détermination d'une direction complémentaire utilisée pour compenser une direction de roues avant sur la base d'une comparaison d'une vitesse de véhicule actuelle et du seuil de vitesse de véhicule, la direction complémentaire comprenant un ou plusieurs éléments parmi une direction de roues arrière complémentaire, une direction de roulis complémentaire par ajustement d'un angle de roulis de véhicule, et une direction de couple vectoriel par ajustement de la force longitudinale pour les roues ;
**caractérisé en ce que** l'étape de sélection d'un seuil de vitesse de véhicule prédéfini comprend : la sélection du seuil de vitesse de véhicule prédéfini en fonction du degré de défaillance de la capacité de direction des roues avant du véhicule.

2. Procédé de commande de direction selon la revendication 1, dans lequel le degré de défaillance de la capacité de direction des roues avant du véhicule comprend une défaillance partielle de la capacité de direction et une défaillance complète de la capacité de direction ; et le seuil de vitesse de véhicule comprend un premier seuil de vitesse de véhicule associé à la défaillance partielle de la capacité de direction et un deuxième seuil de vitesse de véhicule associé à la défaillance complète de la capacité de direction.

3. Procédé de commande de direction selon la revendication 2, dans lequel
lorsque le degré de défaillance de la capacité de direction est la défaillance partielle de la capacité de direction, il est déterminé si la vitesse de véhicule actuelle est supérieure au premier seuil de vitesse de véhicule ; et si oui, la direction complémentaire n'est pas utilisée, et si non, la direction de roues arrière complémentaire et la direction de roulis complémentaire sont utilisées comme direction complémentaire ; et
lorsque le degré de défaillance de la capacité de direction est la défaillance complète de la capacité de direction, il est déterminé si la vitesse de véhicule actuelle est supérieure au deuxième seuil de vitesse de véhicule ; et si oui, la direction de couple vectoriel et la direction de roues arrière complémentaire sont utilisées comme direction complémentaire, et si non, la direction de roues arrière complémentaire et la direction de roulis complémentaire sont utilisées comme direction complémentaire.

4. Procédé de commande de direction selon la revendication 2, comprenant en outre :
lorsque le degré de défaillance de la capacité de direction est la défaillance partielle de la capacité de direction ou la défaillance complète de la capacité de direction, l'envoi d'une instruction de décélération à un dispositif de commande de frein du véhicule de telle sorte que le dispositif de commande de frein commande à un frein du véhicule de réaliser une action de décélération.

5. Procédé de commande de direction selon la revendication 1, dans lequel lorsque la direction complémentaire comprend la direction de roulis complémentaire, une première instruction de commande est envoyée à un dispositif de commande de suspension pour commander à une suspension active d'augmenter un angle de roulis de véhicule de façon à fournir un moment de lacet complémentaire, et/ou lorsque la direction complémentaire comprend la direction de couple vectoriel, une deuxième instruction de commande est envoyée à un dispositif de commande d'entraînement et/ou à un dispositif de commande de frein pour ajuster une force longitudinale pour des roues avant et des roues arrière du véhicule de façon à fournir le moment de lacet complémentaire.

6. Système de commande de direction (100), comprenant :
un module de surveillance (1) configuré pour surveiller un état de capacité de direction de roues avant d'un véhicule ;
un module de détermination (2) configuré pour sélectionner un seuil de vitesse de véhicule prédéfini lorsque la capacité de direction des roues avant du véhicule défaillit, puis comparer une vitesse de véhicule actuelle et le seuil de vitesse de véhicule, et déterminer, en fonction d'une comparaison de la vitesse de véhicule actuelle et du seuil de vitesse de véhicule, une direction complémentaire utilisée pour compenser la direction de roues avant, la direction complémentaire comprenant un ou plusieurs éléments parmi une direction de roues arrière complémentaire, une direction de roulis complémentaire par ajustement d'un angle de roulis de véhicule, et une direction de couple vectoriel par ajustement de la force longitudinale pour les roues ; et
un module de commande (3) configuré pour envoyer une instruction de commande correspondante à une unité d'actionnement de direction en fonction de la direction complémentaire déterminée par le module de détermination (2) ;
**caractérisé en ce que**,
le module de détermination (2) est en outre configuré pour obtenir le degré de défaillance de la capacité de direction des roues avant du véhicule de la part du module de surveillance (1), et sélectionner le seuil de vitesse de véhicule prédéfini en fonction du degré de défaillance.

7. Système de commande de direction (100) selon la revendication 6, dans lequel le degré de défaillance de la capacité de direction des roues avant du véhicule comprend une défaillance partielle de la capacité de direction et une défaillance complète de la capacité de direction ; et le seuil de vitesse de véhicule comprend un premier seuil de vitesse de véhicule associé à la défaillance partielle de la capacité de direction et un deuxième seuil de vitesse de véhicule associé à la défaillance complète de la capacité de direction.

8. Système de commande de direction (100) selon la revendication 7, dans lequel
lorsque le degré de défaillance de la capacité de direction obtenue par le module de détermination (2) est la défaillance partielle de la capacité de direction, il est déterminé si la vitesse de véhicule actuelle est supérieure au premier seuil de vitesse de véhicule ; et si oui, il est déterminé que la direction complémentaire n'est pas utilisée, et si non, il est déterminé que la direction de roues arrière complémentaire et la direction de roulis complémentaire sont utilisées comme direction complémentaire ; et
lorsque le degré de défaillance de la capacité de direction obtenue par le module de détermination (2) est la défaillance complète de la capacité de direction, il est déterminé si la vitesse de véhicule actuelle est supérieure au deuxième seuil de vitesse de véhicule ; et si oui, il est déterminé que la direction de couple vectoriel et la direction de roues arrière complémentaire sont utilisées comme direction complémentaire, et si non, il est déterminé que la direction de roues arrière complémentaire et la direction de roulis complémentaire sont utilisées comme direction complémentaire.

9. Système de commande de direction (100) selon la revendication 7, dans lequel lorsque le degré de défaillance de la capacité de direction est la défaillance partielle de la capacité de direction ou la défaillance complète de la capacité de direction, le module de commande (3) envoie une instruction de décélération à un dispositif de commande de frein du véhicule de telle sorte que le dispositif de commande de frein commande à un frein du véhicule de réaliser une action de décélération.

10. Système de commande de direction (100) selon la revendication 6, dans lequel lorsque la direction complémentaire comprend la direction de roulis complémentaire, le module de commande (3) envoie une première instruction de commande à un dispositif de commande de suspension de commander à une suspension active d'augmenter un angle de roulis de véhicule de façon à fournir un moment de lacet complémentaire, et/ou lorsque la direction complémentaire comprend la direction de couple vectoriel, le module de commande (3) envoie une deuxième instruction de commande à un dispositif de commande d'entraînement et/ou à un dispositif de commande de frein pour ajuster une force longitudinale pour des roues avant et des roues arrière du véhicule de façon à fournir le moment de lacet complémentaire.

11. Support de stockage lisible par ordinateur sur lequel est stocké un programme informatique, le programme informatique, lorsqu'il est exécuté par un processeur, mettant en œuvre un procédé de commande de direction selon l'une quelconque des revendications 1 à 5.

12. Véhicule, comprenant un système de commande de direction (100) selon l'une quelconque des revendications 6 à 10.
